# EUROPÄISCHE PATENTSCHRIFT

(11) **EP 3 329 238 B1**
(45) Veröffentlichungstag und Bekanntmachung des Hinweises auf die Patenterteilung: **03.04.2019**
(21) Anmeldenummer: 16724637.0
(22) Anmeldetag: 24.05.2016
(51) Int. Cl.: G01M 3/32, B07C 5/34

(54) **PRÜFVORRICHTUNG SOWIE VERFAHREN ZUM ÜBERPRÜFEN EINER DICHTHEIT VON BEHÄLTNISSEN**
TESTING DEVICE AND METHOD FOR TESTING THE TIGHTNESS OF CONTAINERS
DISPOSITIF D'INSPECTION ET PROCÉDÉ D'INSPECTION D'UNE ÉTANCHÉITE DE RÉCIPIENTS

(30) Priorität: 29.07.2015 DE 102015214348
(43) Veröffentlichungstag der Anmeldung: 06.06.2018
(73) Patentinhaber: Robert Bosch GmbH, 70442 Stuttgart (DE)
(72) Erfinder: MAURISCHAT, Wolfgang, 74589 Satteldorf (DE)
(86) Internationale Anmeldenummer: PCT/EP2016/061661
(87) Internationale Veröffentlichungsnummer: WO 2017/016701

(56) Entgegenhaltungen:
- DE-T2- 69 734 953
- DE-T2- 69 734 953
- JP-A- S6 415 626
- US-A- 2 606 657
- US-A1- 2015 177 093

## Beschreibung

### Stand der Technik

Die vorliegende Erfindung betrifft eine Prüfvorrichtung zur Überprüfung einer Dichtheit von Behältnissen sowie ein entsprechendes Prüfverfahren zum Überprüfen einer Dichtheit.

Häufig muss bei verpackten Gütern, beispielsweise bei pharmazeutischen Erzeugnissen, eine Qualitätsprüfung des Behältnisses hinsichtlich seiner Dichtheit durchgeführt werden. Hierbei sind grundsätzlich die Möglichkeiten einer Dichtheitsprüfung mit Überdruck oder mit Unterdruck (Vakuum) möglich. Hierzu wird ein bei Normaldruck befülltes und verschlossenes Behältnis in einer geschlossenen Kammer beispielsweise unter Vakuum gesetzt. Dann wird eine gewisse Zeitspanne gewartet und eine Druckveränderung pro Zeiteinheit im Vakuumbereich gemessen. Wenn der Vakuumdruck konstant bleibt, ist dies ein Kennzeichen für ein dichtes Behältnis. Wenn der Vakuumdruck allerdings ansteigt, ist dies unter der Annahme einer dichten Kammer ein Zeichen für die Undichtheit des Behältnisses, weil über undichte Stellen im Behältnis, z.B. Löcher oder Risse usw., ein messbarer Druckausgleich zwischen dem Innenraum des Behältnisses und der Vakuumkammer erfolgt. Bei einer Dichtheitsprüfung mit Überdruck kommt es bei einem undichten Behältnis und unter der Annahme einer dichten Kammer zu einem Druckabfall in der Kammer, da das Druckmedium über einen Riss oder dergleichen in das Innere des Behältnisses gelangt und somit ein Druckausgleich stattfindet. Um das Verfahren wirtschaftlich durchführen zu können, ist beispielsweise aus der DE 3925494 A1 eine gleichzeitige Überprüfung mehrerer Behältnisse in einer Kammer offenbart. Hierbei ergibt sich jedoch das Problem, dass wenn eines der Behältnisse undicht ist, die gesamten Behältnisse bisher als undicht angesehen werden und alle entsorgt werden. Dies ist häufig jedoch eine Ressourcenverschwendung, da wenn nur eines der Behältnisse undicht ist, die anderen Behältnisse eigentlich verwendbar wären.

Andere Prüfvorrichtungen zur Überprüfung der Dichtheit von Behältnissen sind aus den JP S64 15626, DE 697 34 953 und US 2 606 657 offenbart.

### Offenbarung der Erfindung

Die erfindungsgemäße Prüfvorrichtung zur Überprüfung einer Dichtheit von Behältnissen mit den Merkmalen des Anspruchs 1 weist demgegenüber den Vorteil auf, dass einerseits eine sehr hohe Ausbringungsmenge möglich ist und andererseits nur wirklich diejenigen Behältnisse aus der Weiterverarbeitung entfernt werden, welche tatsächlich undicht sind. Dadurch wird eine Ressourcenschonung erreicht und nur noch tatsächlich die beschädigten Behältnisse aussortiert. Dies wird erfindungsgemäß dadurch erreicht, dass die Prüfvorrichtung eine Prüfeinheit aufweist, für welche Prüfkammern für mehrere Behältnisse und Prüfkammern für eine Einzelprüfung vorgesehen sind. Somit kann gleichzeitig während der normalen Mehrfachprüfung auch eine ergänzende Einzelprüfung von Behältnissen durchgeführt werden. Die Prüfvorrichtung umfasst dabei neben der Prüfeinheit eine Zufuhreinheit zum Zuführen der Behältnisse und eine Abführeinheit zum Abführen geprüfter Behältnisse. Ferner ist eine Ausschleuseeinheit vorgesehen, um von der Prüfeinheit als undicht geprüfte Behältnisse auszuschleusen. Eine Steuereinheit ist vorgesehen und eingerichtet, mittels der Ausschleuseeinheit ausgeschleuste Behältnisse aus einer Mehrfachprüfkammer einzeln einer Einzelprüfung in der Prüfeinheit zuzuführen. Hierdurch werden die in der Mehrfachkammer geprüften Behältnisse, welche als undicht geprüft wurden, somit nochmals einzeln nachgeprüft und dann können das oder die tatsächlich undichten Behältnisse aus dem Produktionsprozess entfernt werden.

Die Unteransprüche zeigen bevorzugte Weiterbildungen der Erfindung.

Vorzugsweise umfasst die Zufuhreinheit ein erstes Sternrad, um die Behältnisse zuzuführen.

Besonders bevorzugt umfasst die Zuführeinheit ein erstes Sternrad und ein zweites Sternrad. Die Behältnisse für die Mehrfachprüfkammern werden dabei mittels des ersten Sternrads zugeführt und die Behältnisse für die Einzelprüfkammer werden mittels des zweiten Sternrads zugeführt. Dadurch kann eine unabhängige Zuführung zu den Mehrfachprüfkammern bzw. den Einzelprüfkammern ermöglicht werden.

Ferner umfasst die Prüfvorrichtung bevorzugt ein Zwischenlager zur Aufnahme von mittels der Ausschleusvorrichtung ausgeschleusten Behältnissen. Die ausgeschleusten Behältnisse werden im Zwischenlager zwischengelagert, um eine Ruhephase zu ermöglichen, in welcher ein Druckausgleich eines undichten Behältnisses mit dem Atmosphärendruck möglich ist. Erst nach Ablauf einer vorbestimmten Zeitspanne in der Ruhephase werden dann die Behältnisse der Einzelprüfung unterzogen.

Weiter bevorzugt ist die Steuereinheit auch dazu eingerichtet, um die Behältnisse aus dem Zwischenlager zur Einzelprüfung zur Prüfeinheit zuzuführen.

Weiter bevorzugt sind das erste und zweite Sternrad mechanisch miteinander gekoppelt. Dadurch kann eine feste Vorgabe hinsichtlich einer Abfolge von Mehrfachprüfkammern und Einzelprüfkammern festgelegt werden, wodurch eine Steuerung der Prüfvorrichtungen signifikant vereinfacht wird.

Weiter bevorzugt umfasst die Prüfvorrichtung ferner einen Roboter zur Handhabung von ausgeschleusten Behältnissen. Hierbei ist es möglich, dass bevorzugt die Ausschleuseinheit ausschließlich den Roboter umfasst und die als undicht geprüft geprüften Behältnisse aus der Prüfeinheit entnimmt.

Alternativ kann die Ausschleuseinheit auch ein Ausschleusrad umfassen.

Weiter bevorzugt weist eine Einzelprüfkammer genau eine einzige Aufnahme für ein Behältnis auf. Alternativ kann die Einzelprüfkammer auch mehrere Aufnahmen für Behältnisse aufweisen, wobei jedoch für die Einzelprüfung nur eine einzige Aufnahme bestückt wird. Dadurch wird eine eigentlich als Mehrfach-Prüfkammer ausgelegte Prüfkammer dann zur Einzel-Prüfkammer.

Weiterhin betrifft die vorliegende Erfindung ein Verfahren zum Überprüfen einer Dichtheit von Behältnissen in einer Prüfeinheit mit Einzelprüfung und Mehrfachprüfung. Gemäß dem erfindungsgemäßen Verfahren werden die Behältnisse zuerst zur Mehrfachprüfung zugeführt, so dass mehrere Behältnisse gleichzeitig hinsichtlich ihrer Dichtheit in einer Mehrfachprüfkammer geprüft werden können. Wenn die Prüfung eine Undichtigkeit ergibt, werden die in der Mehrfachprüfkammer geprüften Behältnisse ausgeschleust und nachfolgend als potentiell undichte geprüfte Behältnisse behandelt. Die potentiell undichten geprüften Behältnisse werden anschließend nochmals der Prüfeinheit zugeführt, allerdings jeweils einzeln zu einer Einzelprüfung, um festzustellen, welches bzw. welche der als potentiell undicht geprüften Behältnisse tatsächlich undicht ist. Anschließend wird das oder die tatsächlich undichte(n) Behältnis(se) aus dem weiteren Produktionsablauf herausgenommen. Für das erfindungsgemäße Verfahren gelten dabei die gleichen Vorteile wie für die erfindungsgemäße Prüfvorrichtung.

Gemäß dem erfindungsgemäßen Verfahren werden bevorzugt die als potentiell undicht ausgeschleusten Behältnisse vor dem nochmaligen Zuführen zur Prüfeinheit zuerst z.B. in einem Zwischenlager zwischengelagert, um bei dem oder den undichten Behältnissen einen Druckausgleich mit dem Umgebungsdruck zu ermöglichen. Die Zwischenlagerung sollte dabei vorzugsweise eine oder mehrere Minuten lang sein.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Draufsicht einer Prüfvorrichtung gemäß einem ersten Ausführungsbeispiel der Erfindung,
- Figur 2: eine schematische, vergrößerte Ansicht der Prüfvorrichtung von Figur 1 und
- Figur 3: eine schematische Draufsicht einer Prüfvorrichtung gemäß einem zweiten Ausführungsbeispiel der Erfindung.

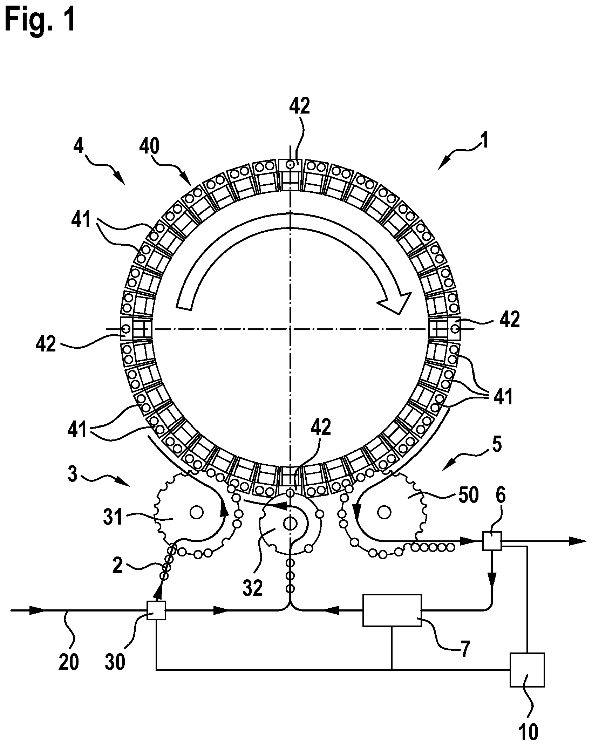

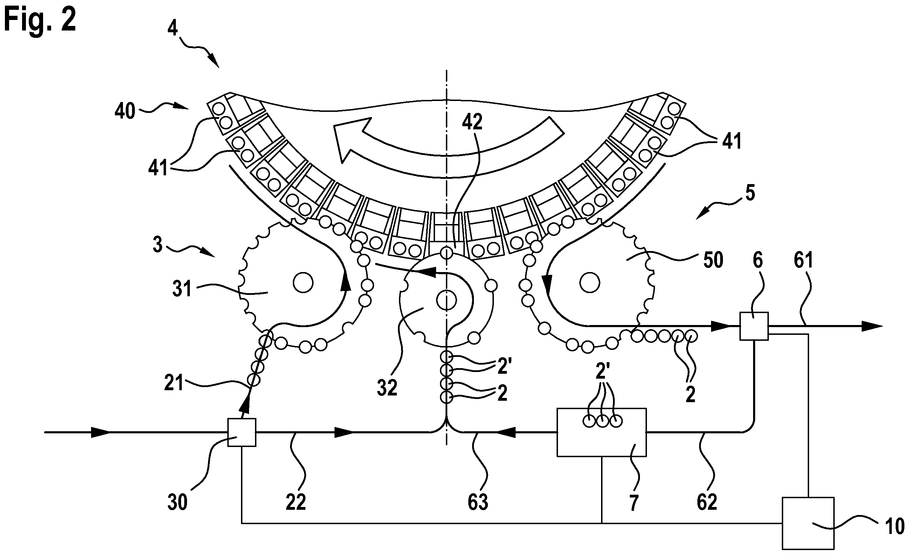

Bevorzugte Ausführungsformen der Erfindung Nachfolgend wird unter Bezugnahme auf die Figuren 1 und 2 eine Prüfvorrichtung 1 gemäß einem ersten bevorzugten Ausführungsbeispiel der Erfindung im Detail beschrieben.

Wie aus den Figuren 1 und 2 ersichtlich ist, umfasst die Prüfvorrichtung 1 eine Zufuhreinheit 3, um Behältnisse 2, welche beispielsweise ein Medikament enthalten und verschlossen sind, auf Dichtheit zu prüfen. Die Behältnisse 2 werden über einen nicht näher dargestellten Zufuhrpfad 20 zu einer Weiche 30 zugeführt. An der Weiche 30 können die zu prüfenden Behältnisse 2 in eine erste Abzweigung 21 oder eine zweite Abzweigung 22 überführt werden (vgl. Figur 2). Die erste Abzweigung 21 führt dabei zu einem ersten Sternrad 31. Die zweite Abzweigung 22 führt zu einem zweiten Sternrad 32.

Weiterhin umfasst die Prüfvorrichtung 1 eine Prüfeinheit 4, welche in diesem Ausführungsbeispiel als Rundläufer 40 ausgebildet ist. Hierbei sind eine Vielzahl von Prüfkammern entlang des Umfangs des Rundläufers 40 angeordnet. Genauer umfasst die Prüfeinheit 4 eine Vielzahl von Mehrfach-Prüfkammern 41 sowie vier Einzel-Prüfkammern 42. Die Einzelprüfkammern dienen dabei zur Prüfung von singulären Behältnissen 2. In diesem Ausführungsbeispiel sind die Einzel-Prüfkammern 42 derart ausgebildet, dass diese genau nur eine Aufnahme für ein Behältnis aufweisen.

Die Mehrfach-Prüfkammern 41 umfassen dabei jeweils zwei Aufnahmen für zwei Behältnisse 2, so dass gleichzeitig zwei Behältnisse geprüft werden können.

Die Anordnung der Mehrfach-Prüfkammern 41 und der Einzel-Prüfkammern 42 ist in einer vorbestimmten Taktung vorgesehen.

Wie insbesondere aus Figur 2 ersichtlich ist, dient dabei das erste Sternrad 31 zur Befüllung der Mehrfach-Prüfkammern 41 und das zweite Sternrad 32 dient zur Befüllung der Einzel-Prüfkammern 42.

Nach dem Befüllen der Prüfkammern werden diese verschlossen und unter Vakuum gesetzt. Dabei weist jede Prüfkammer einen Sensor auf, um eine Druckänderung zu erfassen. Sollte eines der Behältnisse ein Leck oder einen Riss oder dergleichen aufweisen, steigt der Druck in der Prüfkammer an, so dass der Drucksensor die erfolgte Druckänderung in der Kammer erfassen kann und diese Information zur Bestimmung einer Leckage eines Behältnisses 2 verwenden kann.

Die Prüfvorrichtung 1 umfasst ferner eine Abführeinheit 5, welches ein drittes Sternrad 50 aufweist. Die Abführeinheit 5 führt dabei zu einer Ausschleuseinheit 6, welche Behältnisse ausschleust, die während der Druckprüfung als möglicherweise undicht erkannt worden sind. In Figur 2 sind derart als möglicherweise undicht erkannte Behältnisse mit dem Bezugszeichen 2' versehen.

Die Ausschleuseinheit 6 kann dabei die als möglicherweise undicht erkannten Behältnisse 2' in einen Rückführpfad 62 überführen. Die als korrekt und dicht erkannten Behältnisse 2 werden zur weiteren Verarbeitung entsprechend einem Pfad 61 abgeführt.

Der Rückführpfad 62 führt dabei zu einem Zwischenlager 7, in welchem die als möglicherweise undicht erkannten Behältnisse 2' zwischengelagert werden. Die Zwischenlagerung hat dabei den Sinn, dass ein Druckausgleich zwischen dem möglicherweise undichten Behältnis und der Atmosphäre möglich ist. Nach einer vorbestimmten Zeitspanne, z.B. eine Minute, werden die Behältnisse 2' dann über einen Pfad 63 zum zweiten Sternrad 32 zugeführt.

Dadurch können die möglicherweise undichten Behältnisse 2' am zweiten Sternrad 32 vereinzelt werden und in Einzelprüfkammern 42 der Prüfeinheit 4 zugeführt werden und einer nochmaligen Prüfung unterzogen werden.

Damit die Einzel-Prüfkammern 42 nicht möglicherweise leer umlaufen, falls beispielsweise keine Leckage entdeckt wird, können den Einzel-Prüfkammern 42 auch noch nicht geprüfte Behältnisse 2 über den zweiten Abzweig 22 zugeführt werden.

Erfindungsgemäß ist hierbei eine Steuereinheit 10 vorgesehen, welche sowohl die Weiche 30 als auch die Ausschleuseinheit 6 steuert. Ebenfalls steuert die Steuereinheit 10 den Weitertransport bzw. die Zuführung über den Pfad 63 der möglicherweise undichten Behältnisse.

Erfindungsgemäß sind somit innerhalb der Prüfvorrichtung 1 in der Prüfeinheit 4 Prüfkammern für eine Mehrfach-Prüfung von Behältnissen als auch Prüfkammern für eine Einzel-Prüfung von einzelnen Behältnissen vorgesehen. Es sei angemerkt, dass es auch möglich ist, dass die Mehrfach-Prüfkammern 41 nur mit einem einzelnen zu prüfenden Behältnis 2 bestückt werden können, sollte eine Vielzahl von Behältnissen als möglicherweise undicht erkannt worden sein.

Weiterhin ist es auch möglich, im Zwischenlager 7 Prüf-Behältnisse zu lagern, welche dann in vorprogrammierten Abläufen in erzeugte Lücken in der Zufuhrstrecke eingebracht werden können, um die Prüfkammern selbst hinsichtlich ihrer Funktion zu überprüfen. Dadurch kann eine Überprüfung der Prüfkammern hinsichtlich ihrer Funktion (Dichtheit) im laufenden Betrieb unter realen Bedingungen durchgeführt werden.

Das erste Sternrad 31 und das zweite Sternrad 32 sind vorzugsweise fest mechanisch gekoppelt, so dass eine starre mechanische Kopplung zwischen den Sternrädern und dem Rundläufer 40 vorhanden ist und zu einer Synchronisation beim Zuführen der Behältnisse zur Prüfeinheit 4 ermöglicht werden kann.

Das dritte Sternrad 50 kann vorzugsweise auch einen eigenen autonomen Antrieb aufweisen, um eine Handhabung der Behältnisse, beispielsweise durch einen nicht gezeigten Roboter, auch im Stillstand der Prüfvorrichtung zu ermöglichen.

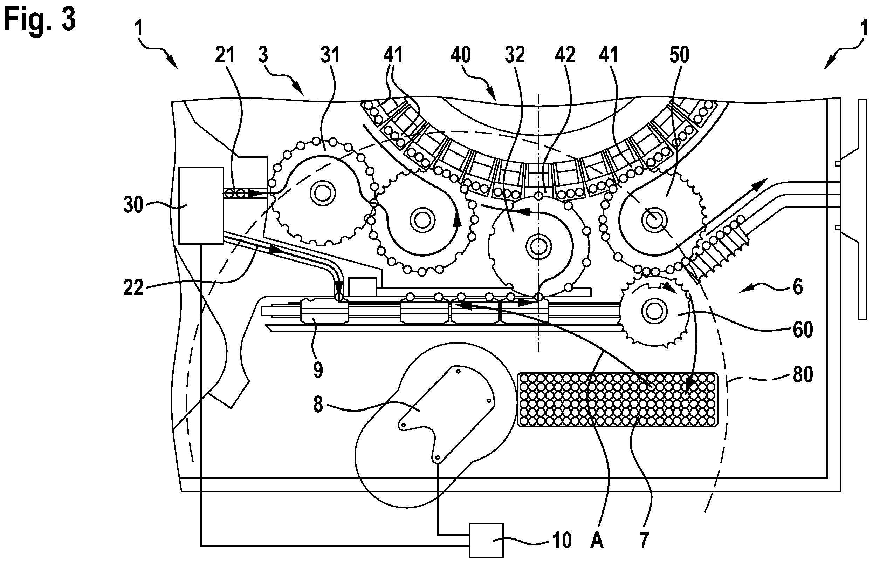

Figur 3 zeigt eine Prüfvorrichtung 1 gemäß einem zweiten Ausführungsbeispiel der Erfindung. Gleiche bzw. funktional gleiche Teile sind dabei mit den gleichen Bezugszeichen bezeichnet. Wie aus Figur 3 ersichtlich ist, ist der Grundaufbau der Prüfvorrichtung ähnlich zu dem Aufbau im ersten Ausführungsbeispiel. Zusätzlich ist beim zweiten Ausführungsbeispiel noch ein Roboter 8 vorgesehen, welcher die Handhabungsaufgaben zwischen der Ausschleuseinheit 6 und dem Zwischenlager 7 sowie dem Zwischenlager 7 und der dem Zufuhrpfad der zweiten Abzweigung 22 zuzuführenden, möglicherweise undichter Behälter 2' übernimmt. In diesem Ausführungsbeispiel können die Mehrfach-Prüfkammern 41 jeweils drei zu prüfende Behältnisse aufnehmen. Der Roboter 8 weist eine in gestrichelten Linien dargestellte Erreichbarkeitskurve 80 auf. Der Roboter 8 wird ebenfalls über die Steuereinheit 10 gesteuert. Die Ausschleuseinheit 6 dieses Ausführungsbeispiels umfasst dabei ein zusätzliches Ausschleusrad 60. Weiterhin ist ein Vereinzelungsrad 33 an der Zufuhreinheit 3 vorgesehen.

Die zweite Abzweigung 22 führt dabei zu einem Linear-Schlittensystem 9, welches Leerplätze generieren kann, in welche der Roboter 8 dann nochmals zu überprüfende möglicherweise undichte Behältnisse 2' zuführen kann. Dies ist durch den Pfeil A gekennzeichnet.

Somit können erfindungsgemäß Behältnisse, welche möglicherweise undicht sind, nochmals einzeln durch eine Prüfeinheit überprüft werden, welche in die eigentliche normale Prüfeinheit integriert ist. Auch kann auf einfache Weise eine regelmäßige Überprüfung der Funktion der Prüfkammern durch beispielsweise auf dem Zwischenlager 7 zwischengelagerte Prüf-Behältnisse durchgeführt werden.

## Patentansprüche

1. Prüfvorrichtung zur Überprüfung einer Dichtheit von Behältnissen (2), umfassend
- eine Zufuhreinheit (3) zum Zuführen der Behältnisse (2),
- eine Prüfeinheit (4) zum Prüfen der Dichtheit der Behältnisse (2),
- eine Abführeinheit (5) zum Abführen geprüfter und dichter Behältnisse (2),
- eine Ausschleuseinheit (6) zum Ausschleusen von in der Prüfeinheit (4) als undicht geprüften Behältnissen (2'),
- wobei die Prüfeinheit (4) wenigstens eine Einzel-Prüfkammer (42) zum Prüfen von einzelnen Behältnissen und wenigstens eine Mehrfach-Prüfkammer (41) zur Aufnahme einer Mehrzahl von Behältnissen zum gleichzeitigen Prüfen mehrerer Behältnisse (2) aufweist, und
- eine Steuereinheit (10), welche eingerichtet ist, mittels der Ausschleuseinheit (6) ausgeschleuste, möglicherweise undichte Behältnisse (2') aus der Mehrfach-Prüfkammer (41) wieder einzeln in die Einzel-Prüfkammer (42) der Prüfeinheit (4) zuzuführen, um einen Einzelprüfung dieser Behältnisse durchzuführen,
**dadurch gekennzeichnet,**
- **dass** die Prüfeinheit als Rundläufer (40) ausgebildet ist,
- wobei entlang des Umfangs des Rundläufers eine Vielzahl von Mehrfach-Prüfkammern (41) und eine Vielzahl von Einzel-Prüfkammern (42) in einer vorbestimmten Taktung vorgesehen ist.

2. Prüfvorrichtung nach Anspruch 1, **dadurch gekennzeichnet, dass** die Zufuhreinheit (3) wenigstens ein erste Sternrad (31) umfasst, um die Behältnisse (2) zuzuführen.

3. Prüfvorrichtung nach Anspruch 2, **dadurch gekennzeichnet, dass** die Zufuhreinheit (3) das erste Sternrad (31) und ein zweites Sternrad (32) umfasst, wobei die Behältnisse (2) in die Mehrfach-Prüfkammern (41) mittels des ersten Sternrads (31) zuführbar sind und einzelne Behältnisse in die Einzel-Prüfkammer (42) mittels des zweiten Sternrads (32) zuführbar sind.

4. Prüfvorrichtung nach einem der vorhergehenden Ansprüche, ferner umfassend ein Zwischenlager (7) zur Aufnahme und Zwischenlagerung von möglicherweise undichten Behältnissen (2'), welche mittels der Ausschleuseinheit (6) ausgeschleust sind.

5. Prüfvorrichtung nach Anspruch 4, **dadurch gekennzeichnet, dass** die Steuereinheit (10) eingerichtet ist, die Behältnisse aus dem Zwischenlager in die Einzel-Prüfkammer (42) zuzuführen.

6. Prüfvorrichtung nach einem der Ansprüche 3 bis 5, **dadurch gekennzeichnet, dass** das erste Sternrad (31) mit dem zweiten Sternrad (32) mechanisch starr miteinander gekoppelt sind.

7. Prüfvorrichtung nach einem der vorhergehenden Ansprüche, ferner umfassend einen Roboter (8) zur Handhabung der Behältnisse, insbesondere der möglicherweise undichten Behältnisse (2').

8. Prüfvorrichtung nach einem der vorhergehenden Ansprüche, **dadurch gekennzeichnet, dass** die Einzel-Prüfkammer (42) genau eine einzige Aufnahme für das Aufnehmen eines einzelnen Behältnisses aufweist.

9. Verfahren zum Überprüfen einer Dichtheit von Behältnissen (2) in einer als Rundläufer ausgebildeten Prüfeinheit (4) mit wenigstens einer Einzel-Prüfkammer (42) zur Aufnahme von einzelnen Behältnissen und wenigstens einer Mehrfach-Prüfkammer (41) zur Aufnahme einer Mehrzahl von Behältnissen, welche entlang des Umfangs des Rundläufers in einer vorbestimmten Taktung vorgesehen sind, umfassend die Schritte
- Zuführen von Behältnissen (2) zur Mehrfach-Prüfkammer (41),
- Prüfen der Dichtheit der Behältnisse (2) in der Mehrfach-Prüfkammer (41),
- wenn die Prüfung in der Mehrfach-Prüfkammer (41) eine Undichtigkeit ergeben hat, erfolgt ein Ausschleusen der als undicht geprüften Behältnisse (2') und
- Zuführen der möglicherweise undichten Behältnisse (2') aus der Mehrfach-Prüfkammer (41) einzeln in die Einzel-Prüfkammer (42), um die möglicherweise undichten Behältnisse einzeln auf Dichtheit zu prüfen.

10. Verfahren nach Anspruch 9, **dadurch gekennzeichnet, dass** die möglicherweise undichten Behältnisse (2') vor dem Zuführen in die Einzel-Prüfkammer (42) für einen vorbestimmten Zeitraum zur Ermöglichung eines Druckausgleichs zwischengelagert werden.

11. Verfahren nach Anspruch 9 oder 10, wobei Prüf-Behältnisse aus einem Zwischenlager (7) zur regelmäßigen Überprüfung der Prüfkammern in die Prüfkammern zugeführt werden.

## Claims

1. Testing device for testing the tightness of containers (2), comprising
- a feeding unit (3) for feeding the containers (2);
- a testing unit (4) for testing the tightness of the containers (2);
- a discharge unit (5) for discharging tested and tight containers (2);
- an evacuation unit (6) for evacuating containers (2') that have tested as untight in the testing unit (4);
- wherein the testing unit (4) has at least one individual testing chamber (42) for testing individual containers, and at least one multiple testing chamber (41) for receiving a plurality of containers in order for a plurality of containers (2) to be simultaneously tested; and
- a control unit (10) which is specified for returning potentially untight containers (2') that have been evacuated by means of the evacuation unit (6) from the multiple testing chamber (41) individually to the individual testing chamber (42) of the testing unit (4), in order for individual testing of said containers to be carried out, **characterized**
- **in that** the testing unit is configured as a rotary magazine (40),
- wherein a multiplicity of multiple testing chambers (41) and a multiplicity of individual testing chambers (42) are provided along the circumference of the rotary magazine in a predetermined timed cycle.

2. Testing device as claimed in Claim 1, **characterized in that** the feeding unit (3) has at least one first star wheel (31) in order for the containers (2) to be fed.

3. Testing device as claimed in Claim 2, **characterized in that** the feeding unit (3) comprises the first star wheel (31) and a second star wheel (32), wherein the containers (2) by means of the first star wheel (31) are feedable to the multiple testing chambers (41), and individual containers by means of the second star wheel (32) are feedable to the individual testing chamber (42).

4. Testing device as claimed in one of the preceding claims, furthermore comprising an intermediate store (7) for receiving and temporarily storing potentially untight containers (2') which are evacuated by means of the evacuation unit (6).

5. Testing device as claimed in Claim 4, **characterized in that** the control unit (10) is specified for feeding the containers from the intermediate store to the individual testing chamber (42).

6. Testing device as claimed in one of Claims 3 to 5, **characterized in that** the first star wheel (31) and the second star wheel (32) are intercoupled in a mechanically rigid manner.

7. Testing device as claimed in one of the preceding claims, furthermore comprising a robot (8) for handling the containers, in particular the potentially untight containers (2').

8. Testing device as claimed in one of the preceding claims, **characterized in that** the individual testing chamber (42) has precisely one single receptacle for receiving an individual container.

9. Method for testing the tightness of containers (2) in a testing unit (4) configured as a rotary magazine having at least one individual testing chamber (42) for receiving individual containers, and at least one multiple testing chamber (41) for receiving a plurality of containers, which are provided along the circumference of the rotary magazine in a predetermined timed cycle, comprising the following method steps:
- feeding containers (2) to the multiple testing chamber (41);
- testing the tightness of the containers (2) in the multiple testing chamber (41);
- performing an evacuation of the containers (2') that have tested as untight when the test in the multiple testing chamber (41) has resulted in a leakage; and
- feeding the potentially untight containers (2') individually from the multiple testing chamber (41) to the individual testing chamber (42) in order for the potentially untight containers to be tested individually for tightness.

10. Method as claimed in Claim 9, **characterized in that** the potentially untight containers (2') prior to being fed to the individual testing chamber (42) are temporarily stored for a predetermined period in order for an equalization of pressure to be enabled.

11. Method as claimed in either of Claims 9 and 10, wherein specimen containers for regularly testing the testing chambers are fed from an intermediate store (7) to the testing chambers.

## Revendications

1. Dispositif de contrôle de l'étanchéité de récipients (2), le dispositif comprenant
- une unité d'acheminement (3) destinée à acheminer les récipients (2),
- une unité de test (4) destinée à tester l'étanchéité des récipients (2),
- une unité d'enlèvement (5) destinée à enlever les récipients testés et étanches (2),
- une unité d'évacuation (6) destinée à évacuer les récipients (2') testés comme non étanches dans l'unité de test (4),
- l'unité de test (4) comportant au moins une chambre de test unique (42) permettant de tester des récipients individuels et au moins une chambre de test multiple (41) destinée à recevoir une pluralité de récipients pour tester simultanément une pluralité de récipients (2), et
- une unité de commande (10) qui est conçue pour acheminer des récipients (2') éventuellement non étanches, évacués au moyen de l'unité d'évacuation (6), de la chambre de test multiple (41) à nouveau individuellement jusque dans la chambre de test unique (42) de l'unité de test (4) pour effectuer un test individuel sur ces récipients,
**caractérisé en ce que**
- l'unité de test est conçue sous la forme d'un carrousel (40),
- une pluralité de chambres de test multiple (41) et une pluralité de chambres de test individuel (42) étant prévues selon une synchronisation prédéterminée le long de la périphérie du carrousel.

2. Dispositif de test selon la revendication 1, **caractérisé en ce que** l'unité d'acheminement (3) comprend au moins une première roue en étoile (31) destinée à acheminer les récipients (2).

3. Dispositif de test selon la revendication 2, **caractérisé en ce que** l'unité d'acheminement (3) comprend la première roue en étoile (31) et une deuxième roue en étoile (32), les récipients (2) pouvant être acheminés jusque dans les chambres de test multiple (41) au moyen de la première roue en étoile (31) et des récipients individuels pouvant être acheminés jusque dans la chambre de test individuel (42) au moyen de la deuxième roue en étoile (32).

4. Dispositif de test selon l'une des revendications précédentes, comprenant en outre un dispositif de stockage provisoire (7) destiné à recevoir et stocker provisoirement d'éventuels récipients (2') qui sont évacués au moyen de l'unité d'évacuation (6).

5. Dispositif de test selon la revendication 4, **caractérisé en ce que** l'unité de commande (10) est adaptée pour acheminer les récipients du dispositif de stockage provisoire jusque dans la chambre de test individuel (42).

6. Dispositif de test selon l'une des revendications 3 à 5, **caractérisé en ce que** la première roue en étoile (31) et la deuxième roue en étoile (32) sont accouplées rigidement et mécaniquement l'une à l'autre.

7. Dispositif de test selon l'une des revendications précédentes, comprenant en outre un robot (8) destiné à manipuler les récipients, en particulier les récipients éventuellement non étanches (2').

8. Dispositif de test selon l'une des revendications précédentes, **caractérisé en ce que** la chambre de test individuel (42) comporte exactement un seul logement destiné à recevoir un seul récipient.

9. Procédé de contrôle de l'étanchéité de récipients (2) dans une unité de test (4) conçue comme un carrousel et comprenant au moins une chambre de test individuel (42) destinée à recevoir des récipients individuels et au moins une chambre de test multiple (41) destinée à recevoir une pluralité de récipients qui sont prévus selon une synchronisation prédéterminée le long de la périphérie du carrousel, le procédé comprenant les étapes suivantes
- acheminer des récipients (2) vers la chambre de test multiple (41),
- tester l'étanchéité des récipients (2) dans la chambre de test multiple (41),
- une évacuation des récipients (2') testés comme non étanches étant effectuée si le test dans la chambre de test multiple (41) a révélé un défaut d'étanchéité et
- acheminer les récipients éventuellement non étanches (2') individuellement de la chambre de test multiple (41) jusque dans la chambre de test individuel (42) pour tester individuellement l'étanchéité des récipients éventuellement non étanches.

10. Procédé selon la revendication 9, **caractérisé en ce que** les récipients éventuellement non étanches (2') sont stockés provisoirement pendant une durée prédéterminée, avant de les acheminer jusque dans la chambre de test individuel (42), pour effectuer une compensation de pression.

11. Procédé selon la revendication 9 ou 10, des récipients de test étant acheminés d'un dispositif de stockage provisoire (7) jusque dans les chambres de test pour vérifier régulièrement les chambres de test.
